# EUROPEAN PATENT SPECIFICATION

(11) **EP 3 096 936 B1**
(45) Date of publication and mention of the grant of the patent: **09.10.2019**
(21) Application number: 14879969.5
(22) Date of filing: 19.12.2014
(51) Int. Cl.: B29C 64/112, B33Y 10/00, C08K 3/34, C08F 292/00, C08F 290/06, G09B 23/30, B33Y 70/00, C08K 5/14, C08K 5/42, C08K 5/07

(54) **METHOD FOR FORMING A THREE-DIMENSIONAL OBJECT**
VERFAHREN ZUR HERSTELLUNG EINES DREIDIMENSIONALEN OBJEKTES
PROCÉDÉ DE PRODUCTION D'UN OBJET TRIDIMENSIONNEL

(30) Priority: 23.01.2014 JP 2014010544; 23.01.2014 JP 2014010546
(43) Date of publication of application: 30.11.2016
(73) Proprietor: Ricoh Company, Ltd., Tokyo 143-8555 (JP)
(72) Inventor: NORIKANE, Yoshihiro, Tokyo 143-8555 (JP)
(74) Representative: Lamb, Martin John Carstairs
(86) International application number: PCT/JP2014/084729
(87) International publication number: WO 2015/111366

(56) References cited:
- EP-A2- 1 491 517
- EP-A2- 1 520 686
- WO-A1-2005/037529
- WO-A1-2013/158508
- WO-A1-2014/007062
- JP-A- 2003 011 237
- JP-A- 2007 117 275
- US-A1- 2006 237 880
- J Chang: "Supervisors: Improving the properties of PEGDA hydrogels by adding clay particles, without reducing the biocompatibility", , 1 October 2009 (2009-10-01), XP055321861, Retrieved from the Internet: URL:http://www.mate.tue.nl/mate/pdfs/10958 .pdf [retrieved on 2016-11-24]

## Description

### Technical Field

The present invention relates to a complex and precise three-dimensional object, and a three-dimensional object formation method that can form the three-dimensional object easily and efficiently.

### Background Art

As a method for forming a stack of layers, there has been proposed a method of sequentially irradiating layers of a liquid-state photo-curable resin with laser light, particularly an ultraviolet ray from one layer to another, to thereby form a three-dimensional object (see e.g., PTL 1). However, according to this method, it is necessary to keep a large stock of the liquid-state photo-curable resin, which necessitates upsizing of the equipment. Another problem is that temperature control, etc. are necessary for stabilizing the quality of the liquid-state photo-curable resin.

Further, in recent years, there has been disclosed an inkjet optical modeling system configured to draw an image with a liquid-state photo-curable resin at a necessary portion of an object, and stack up such images, to thereby form a three-dimensional object. For such an inkjet optical modeling system, there is proposed a method of forming simultaneously with the object to be obtained, a supporter separately from the object to be obtained, to thereby prevent deformation or fall of the three-dimensional object during the object formation (see e.g., PTL 2 and PTL 3).

Examples of inkjet-type methods for forming a stack of layers include a method of jetting a binding agent (binder) to a layer of starch or plaster particles by ink jetting to solidify the layer, and stacking up such layers (classified as "powder layer stacking method"), which has been developed by Massachusetts Institute of Technology, and a method of directly jetting and stacking up a resin for object formation (classified as "melt resin deposition method").

According to the powder layer stacking method using a powder, after object formation is completed, it is necessary to remove unbound residual powder particles by vacuuming or with a brush. Hence, the formed object, which is fragile, may be broken during the removing operation, and is difficult to handle.

On the other hand, the method for directly jetting and stacking up the resin for object formation needs a step of removing the material of the supporter off from an intermediate body of the object taken out after formed. Examples of such a step include a step of scraping the material off with a brush, and a step of removing the material by immersing it in a special solution or water for a long time. When the object has a complex shape, these steps are performed in combination, which consumes a long time and work actually, and requires equipment dedicated for the removal.

Furthermore, there have recently been increasing needs for gel-state soft objects having a three-dimensional precise structure such as medical organ models and cell scaffoldings used in regenerative medicines. However, currently, there has not yet been provided a three-dimensional object formation method that can reproduce a complex precise structure from three-dimensional data.

Reference is also made to WO 2013/158508 which discloses devices, systems and methods for the fabrication of tissue utilizing UV cross-linking, WO 2014/007062, which discloses a non-drying polymer hydrogel and WO 2005/037529 which discloses a method for manufacturing a three-dimensional shaped article.

### Citation List

### Patent Literature

PTL 1 Japanese Patent Application Laid-Open (JP-A) No. 2009-519143
PTL 2 Japanese Patent (JP-B) No. 4366538
PTL 3 JP-B No. 4908679

### Summary of Invention

### Technical Problem

An object of the present invention is to provide a three-dimensional object formation method that can form a complex precise three-dimensional object easily and efficiently.

### Solution to Problem

The present invention is defined by a method in accordance with claim 1.

### Advantageous Effects of Invention

The present invention can provide a three-dimensional object formation method that can solve the conventional problems described above and form a complex precise three-dimensional object easily and efficiently.

### Brief Description of Drawings

Fig. 1 is a schematic diagram showing an example of an object forming step of a three-dimensional object formation method of the present invention.
Fig. 2 is a schematic diagram showing another example of an object forming step of a three-dimensional object formation method of the present invention.
Fig. 3 is a diagram showing an intermediate body formed according to a three-dimensional object formation method, and its state after detached.
Fig. 4 is a schematic diagram showing an example of an organ model of a liver.

### Description of Embodiments

### (Three-Dimensional Object Formation Liquid Set)

A three-dimensional object formation liquid set of the present invention include a first liquid and a second liquid, and further includes other components, etc. according to necessity.

### <First Liquid>

The first liquid contains water and a hydrogel precursor, and further contains other components according to necessity. The first liquid is also called "soft object material".

### -Water-

Examples of the water include pure water or ultrapure water such as ion-exchanged water, ultrafiltration water, reverse osmotic water, and distilled water.

An organic solvent or any other component may be dissolved or dispersed in the water according to such purposes as imparting a moisture retaining property, imparting an antibiotic property, imparting conductivity, adjusting hardness, etc.

### -Hydrogel Precursor-

The hydrogel precursor contains a water-dispersible mineral, and a polymerizable monomer, and further contains other components according to necessity.

### --Water-Dispersible Mineral--

The water-dispersible mineral is a water-swellable layered clay mineral.

A water-swellable layered clay mineral is a layered clay mineral dispersible in water uniformly at a primary crystal level. Examples thereof include water-swellable smectite, and water-swellable mica. More specific examples include water-swellable hectorite, water-swellable montmorillonite, water-swellable saponite, and water-swellable synthetic mica that contain sodium as interlayer ions.

One of the examples listed as the water-swellable layered clay mineral may be used alone, or two or more of these may be used in combination. Further, the water-swellable layered clay mineral may be an appropriately synthesized product or a commercially available product.

Examples of commercially available products include synthetic hectorite (LAPONITE XLG ⁽™⁾ manufactured by Rockwood Holdings, Inc.), SWN ⁽™⁾ (manufactured by Coop Chemical Ltd.), and fluorinated hectorite SWF ⁽™⁾ (manufactured by Coop Chemical Ltd.).

The content of the water-dispersible mineral is not particularly limited and may be appropriately selected according to the purpose. However, it is preferably from 1% by mass to 40% by mass relative to the whole amount of the first liquid.

### --Polymerizable Monomer--

Examples of the polymerizable monomer include acrylamide, N-substituted acrylamide derivative, N,N-disubstituted acrylamide derivative, N-substituted methacrylamide derivative, and N,N-disubstituted methacrylamide derivative. One of these may be used alone, or two or more of these may be used in combination.

Examples of the polymerizable monomer include acrylamide, N,N-dimethyl acrylamide, and N-isopropyl acrylamide.

It is possible to obtain a water-soluble organic polymer having an amide group, an amino group, hydroxyl, a tetramethyl ammonium group, a silanol group, an epoxy group, or the like, by polymerizing the polymerizable monomer. The water-soluble organic polymer having an amide group, an amino group, hydroxyl, a tetramethyl ammonium group, a silanol group, an epoxy group, or the like is a constituent component advantageous for maintaining the strength of an aqueous gel.

The content of the polymerizable monomer is not particularly limited and may be appropriately selected according to the purpose. However, it is preferably from 0.5% by mass to 20% by mass relative to the whole amount of the first liquid.

### --Other Components--

Other components are not particularly limited, and arbitrary components may be selected according to the purpose. Examples thereof include a stabilizing agent, a surface treating agent, a photopolymerization initiator, a colorant, a viscosity modifier, a tackifier, an antioxidant, an anti-aging agent, a cross-linking promoter, an ultraviolet absorber, a plasticizer, an antiseptic agent, and a dispersant.

The stabilizing agent is used for keeping the water-swellable layered clay mineral in a stably dispersed state to maintain a sol state. Further, in an inkjet system, the stabilizing agent is used according to necessity, in order to stabilize properties as a liquid.

Examples of the stabilizing agent include a high-concentration phosphoric salt, glycol, and a nonionic surfactant.

Examples of the surface treating agent include a polyester resin, a polyvinyl acetate resin, a silicone resin, a coumarone resin, fatty acid ester, glyceride, and a wax.

The surface tension of the first liquid is not particularly limited, and may be appropriately selected according to the purpose. However, it is preferably from 20 mN/m to 45 mN/m, and more preferably from 25 mN/m to 34 mN/m.

When the surface tension is less than 20 mN/m, the first liquid may be discharged unstably during object formation (may be discharged in a bent direction or may not be able to be discharged). When the surface tension is greater than 45 mN/m, a discharge nozzle or the like for object formation may not be able to be filled fully with the liquid.

The surface tension can be measured with, for example, a surface tensiometer (AUTOMATIC CONTACT ANGLE GAUGE DM-701 manufactured by Kyowa Interface Science Co., Ltd.).

The viscosity of the first liquid is not particularly limited and may be appropriately selected according to the purpose, and it is possible to use the first liquid having an arbitrary viscosity by adjusting the temperature. However, for example, the viscosity is preferably from 3 mPa·s to 20 mPa·s, and more preferably from 6 mPa·s to 12 mPa·s at 25°.

When the viscosity is less than 3 mPa·s, the first liquid may be discharged unstably during object formation (may be discharged in a bent direction or may not be able to be discharged). When the viscosity is greater than 20 mPa·s, the first liquid may not be able to be discharged.

The viscosity can be measured with, for example, a rotary viscometer (VISCOMATE VM-150III manufactured by Toki Sangyo Co., Ltd.) at 25°C.

### <Second Liquid>

The second liquid contains at least a curable material, preferably contains a photopolymerization initiator and a colorant, and further contains other components according to necessity. The second liquid is also called "hard object material".

The curable material is not particularly limited, and an arbitrary curable material may be selected according to the purpose as long as it is a compound that is cured when irradiated with an active energy ray, when heated, or the like. Examples thereof include an active energy ray-curable compound, a photopolymerizable prepolymer, an emulsion-type photo-curable resin, and a thermosetting compound. Among these, a material that is liquid at normal temperature is preferable in terms of preventing nozzle clogging.

The active energy ray-curable compound is a compound that undergoes radical polymerization or cationic polymerization when irradiated with an active energy ray.

Examples of the compound that undergoes radical polymerization includes a compound having an ethyleny unsaturated group.

Examples of a compound that undergoes cationic polymerization include a compound having an alicyclic epoxy group or an oxetane ring.

The active energy ray-curable compound is a monomer having a relatively low viscosity and having a radical-polymerizable unsaturated double bond in the molecular structure thereof. Examples thereof include monofunctional 2-ethylhexyl(meth)acrylate (EHA), 2-hydroxyethyl(meth)acrylate (HEA), 2-hydroxypropyl(meth)acrylate (HPA), caprolactone-modified tetrahydrofurfuryl(meth)acrylate, isobornyl(meth)acrylate, 3-methoxybutyl(meth)acrylate, tetrahydrofurfuryl(meth) acrylate, lauryl(meth) acrylate, 2-phenoxyethyl(meth)acrylate, isodecyl(meth)acrylate, isooctyl(meth)acrylate, tridecyl(meth) acrylate, caprolactone(meth)acrylate, ethoxylated nonylphenol(meth)acrylate, bifunctional tripropylene glycol di(meth)acrylate, triethylene glycol (meth)acrylate, tetraethylene glycol di(meth)acrylate, polypropylene glycol di(meth)acrylate, neopentyl glycol hydroxypivalic acid ester di(meth)acrylate (MANDA), hydroxypivalic acid neopentyl glycol ester di(meth)acrylate (HPNDA), 1,3-butanediol di(meth)acrylate (BGDA), 1,4-butanediol di(meth)acrylate (BUDA), 1,6-hexanediol di(meth)acrylate (HDDA), 1,9-nonanediol di(meth)acrylate, diethylene glycol di(meth)acrylate (DEGDA), neopentyl glycol di(meth)acrylate (NPGDA), tripropylene glycol di(meth)acrylate (TPGDA), caprolactone-modified hydroxypivalic acid neopentyl glycol ester di(meth)acrylate, propoxylated neopentyl glycol di(meth)acrylate, ethoxy-modified bisphenol A di(meth)acrylate, polyethylene glycol 200 di(meth)acrylate, polyethylene glycol 400 di(meth)acrylate, multifunctional trimethylolpropane tri(meth)acrylate (TMPTA), pentaerythritol tri(meth)acrylate (PETA), dipentaerythritol hexa(meth)acrylate (DPHA), triallyl isocyanate, ε-caprolactone-modified dipentaerythritol (meth)acrylate, tris(2-hydroxyethyl)isocyanurate tri(meth)acrylate, ethoxylated trimethylolpropane tri(meth)acrylate, propoxylated trimethylolpropane tri(meth)acrylate, propoxylated glyceryl tri(meth)acrylate, pentaerythritol tetra(meth)acrylate, ditrimethylolpropane tetra(meth)acrylate, dipentaerythritol hydroxypenta(meth)acrylate, ethoxylated pentaerythritol tetra(meth)acrylate, and penta(meth)acrylate ester. One of these may be used alone, or two or more of these may be used in combination.

Examples of commercially available trade marks products of the active energy ray-curable compound include: KAYARAD TC-110S, KAYARAD R-128H, KAYARAD R-526, KAYARAD NPGDA, KAYARAD PEG400DA, KAYARAD MANDA, KAYARAD R-167, KAYARAD HX-220, KAYARAD HX-620, KAYARAD R-551, KAYARAD R-712, KAYARAD R-604, KAYARAD R-684, KAYARAD GPO, KAYARAD TMPTA, KAYARAD THE-330, KAYARAD TPA-320, KAYARAD TPA-330, KAYARAD PET-30, KAYARADRP-1040, KAYARAD T-1420, KAYARAD DPHA, KAYARAD DPHA-2C, KAYARAD D-310, KAYARAD D-330, KAYARAD DPCA-20, KAYARAD DPCA-30, KAYARAD DPCA-60, KAYARAD DPCA-120, KAYARAD DN-0075, KAYARAD DN-2475, KAYAMER PM-2, KAYAMER PM-21, KS SERIES HDDA, TPGDA, TMPTA, SR SERIES 256, 257, 285, 335, 339A, 395, 440, 495, 504, 111, 212, 213, 230, 259, 268, 272, 344, 349, 601, 602, 610, 9003, 368, 415, 444, 454, 492, 499, 502, 9020, 9035, 295, 355, 399E494, 9041203, 208, 242, 313, 604, 205, 206, 209, 210, 214, 231E239, 248, 252, 297, 348, 365C, 480, 9036, and 350 (all manufactured by Nippon Kayaku Co., Ltd.); and BEAMSET 770 (manufactured by Arakawa Chemical Industries, Ltd.). One of these may be used alone, or two or more of these may be used in combination.

The photopolymerizable prepolymer may be a photopolymerizable prepolymer used for producing an ultraviolet-curable resin. Examples of the photopolymerizable prepolymer include a polyester resin, an acrylic resin, an epoxy resin, a urethane resin, an alkyd resin, an ether resin, and acrylate or methacrylate of multivalent alcohol.

Examples of the emulsion-type photo-curable resin include polyester (meth)acrylate, bisphenol-based epoxy (meth)acrylate, bisphenol A-based epoxy (meth)acrylate, propylene oxide-modified bisphenol A-based epoxy (meth)acrylate, alkali-soluble epoxy (meth)acrylate, acrylic-modified epoxy (meth)acrylate, phosphoric acid-modified epoxy (meth)acrylate, polycarbonate-based urethane (meth)acrylate, polyester-based urethane (meth)acrylate, alicyclic urethane (meth)acrylate, aliphatic urethane (meth)acrylate, polybutadiene (meth)acrylate, and polystyryl (meth)acrylate.

Examples of commercially available products ^{(trade marks)} of the emulsion-type photo-curable resin include: DIABEAM UK6105, DIABEAM UK6038, DIABEAM UK6055, DIABEAM UK6063, and DIABEAM UK4203 (all manufactured by Mitsubishi Rayon Co., Ltd.); OLESTER RA 1574 (manufactured by Mitsui Chemicals, Inc.); KAYARAD UX SERIES 2201, 2301, 3204, 3301, 4101, 6101, 7101, 8101, KAYARAD R&EX SERIES, 011, 300, 130, 190, 2320, 205, 131, 146, 280, KAYARAD MAX SERIES, 1100, 2100, 2101, 2102, 2203, 2104, 3100, 3101, 3510, and 3661 (all manufactured by Nippon Kayaku Co., Ltd.); BEAMSET 700, 710, 720, 750, 502H, 504H, 505A-6, 510, 550B, 551B, 575, 261, 265, 267, 259, 255, 271, 243, 101, 102, 115, 207TS, 575CB, AQ-7, AQ-9, AQ-11, and EM-90, EM-92 (all manufactured by Arakawa Chemical Industries, Ltd.); and 0304TB, 0401TA ,0403KA, 0404EA, 0404TB, 0502TI0502TC, 102A, 103A, 103B, 104A, 1312MA, 1403EA, 1422TM, 1428TA, 1438MG, 1551MB, IBR-305, 1FC-507, 1SM-012, 1AN-202, 1ST-307, 1AP-201, 1PA-202, 1XV-003, 1KW-430, 1KW-501, 4501TA, 4502MA, 4503MX, 4517MB, 4512MA, 4523TI, 4537MA, 4557MB, 6501MA, 6508MG, 6513MG, 6416MA, 6421MA, 6560MA, 6614MA, 717-1, 856-5, QT701-45, 6522MA, 6479MA, 6519MB, 6535MA, 724-65A, 824-65, 6540MA,6RI-350, 6TH-419, 6HB-601, 6543MB, 6AZ-162, 6AZ-309, 6AZ-215, 6544MA, 6AT-203B, 6BF-203, 6AT-113, 6HY316, 6RL-505, 7408MA, 7501TE, 7511MA, 7505TC, 7529MA, MT408-13, MT408-15, MT408-42, 7CJ-601, 7PN-302, 7541MB, 7RZ-011, 7613MA, 8DL-100, 8AZ-103, 5YD-420, 9504MNS, ACRIT WEM-202U, 030U, 321U, 306U, 162, WBR-183U, 601U, 401U, 3DR-057, 829, and 828 (all manufactured by Taisei Kako Co., Ltd.)

The content of the curable material is not particularly limited, and may be appropriately selected according to the purpose. However, it is preferably from 0.001% by mass to 1% by mass relative to the whole amount of the second liquid.

### -Photopolymerization Initiator-

The photopolymerization initiator may be an arbitrary substance that produces radicals when irradiated with light (particularly, an ultraviolet ray having a wavelength of from 220 nm to 400 nm).

Examples of the photopolymerization initiator include acetophenone, 2,2-diethoxyacetophenone, p-dimethyl amino acetophenone, benzophenone, 2-chlorobenzophenone, p,p'-dichlorobenzophenone, p,p-bisdiethyl amino benzophenone, Michler ketone, benzyl, benzoin, benzoin methyl ether, benzoin ethyl ether, benzoin isopropyl ether, benzoin-n-propyl ether, benzoin isobutyl ether, benzoin-n-butyl ether, benzyl methyl ketal, thioxanthone, 2-chlorothioxanthone, 2-hydroxy-2-methyl-1-phenyl-1-one, 1-(4-isopropylphenyl)2-hydroxy-2-methylpropan-1-one, methyl benzoyl formate, 1-hydroxycyclohexyl phenyl ketone, azobis isobutyronitrile, benzoyl peroxide, and di-tert-butyl peroxide. One of these may be used alone, or two or more of these may be used in combination.

The second liquid may contain a sensitizer in order for a curing speed thereof from being lowered due to light (particularly, ultraviolet ray) being absorbed or hidden by a pigment contained in the second liquid when irradiated with light (particularly, ultraviolet ray).

Examples of the sensitizer include: cyclic amine-based compound such as aliphatic amine, amine having an aromatic group, and piperidine; a urea-based compound such as o-tolyl thiourea; a sulfur compound such as sodium diethyl thiophosphate, and a soluble salt of aromatic sulfinic acid; a nitrile compound such as N,N'-disubstituted-p-aminobenzonitrile; a phosphorus compound such as tri-n-butyl phosphine, and sodium diethyl dithiophosphide; and a nitrogen compound such as Michler ketone, N-nitrosohydroxylamine derivative, an oxazolidine compound, a tetrahydro-1,3-oxazine compound, formaldehyde, and a condensation product of acetaldehyde with diamine. One of these may be used alone, or two or more of these may be used in combination.

### -Colorant-

Suitable as the colorant are a dye and a pigment that are soluble or stably dispersible in the second liquid, and have a thermal stability. Among these, a solvent dye is preferable. Further, two or more kinds of colorants may be mixed at an appropriate timing for the purposes of color adjustment, etc.

The pigment may be various types of organic and inorganic pigments. Examples thereof include: an azo pigment such as azo lake, an insoluble azo pigment, a condensed azo pigment, and a chelate azo pigment; and a polycyclic pigment such as a phthalocyanine pigment, a perylene pigment, an anthraquinone pigment, a quinacridone pigment, a dioxazine pigment, a thioindigo pigment, an isoindolinone pigment, and a quinophthalone pigment.

### -Other Components-

Other components are not particularly limited, and arbitrary components may be selected according to the purpose. Examples thereof include a water-soluble resin, a low boiling point alcohol, a surfactant, a viscosity modifier, a tackifier, an antioxidant, an anti-aging agent, a cross-linking promoter, an ultraviolet absorber, a plasticizer, an antiseptic agent, and a dispersant.

### --Water-Soluble Resin--

Examples of the water-soluble resin include a polyvinyl alcohol resin, a polyacrylic acid resin, a cellulose resin, starch, gelatin, a vinyl resin, an amide resin, an imide resin, an acrylic resin, and polyethylene glycol.

### --Low Boiling Point Alcohol--

The low boiling point alcohol is preferably an aliphatic alcohol having 1 to 4 carbon atoms.

Examples of the aliphatic alcohol having 1 to 4 carbon atoms include methyl alcohol, ethyl alcohol, n-propyl alcohol, isopropyl alcohol, n-butyl alcohol, sec-butyl alcohol, tert-butyl alcohol, and isobutyl alcohol. One of these may be used alone, or two or more of these may be used in combination.

The content of the low boiling point alcohol is preferably from 1% by mass to 30% by mass, and more preferably from 10% by mass to 20% by mass relative to the whole amount of the second liquid. When the content is greater than 30% by mass, dischargeability of the second liquid may be problematic. When the content is less than 1% by mass, an effect of improving a drying speed may not be obtained.

The surface tension of the second liquid is not particularly limited, and may be appropriately selected according to the purpose. However, it is preferably from 20 mN/m to 45 mN/m, and more preferably from 25 mN/n to 34 mN/m.

When the surface tension is less than 20 mN/m, the second liquid may be discharged unstably during object formation (may be discharged in a bent direction or may not be able to be discharged). When the surface tension is greater than 45 mN/m, a discharge nozzle or the like for object formation may not be able to be filled fully with the liquid.

The surface tension can be measured with, for example, a surface tensiometer (AUTOMATIC CONTACT ANGLE GAUGE DM-701 manufactured by Kyowa Interface Science Co., Ltd.).

The viscosity of the second liquid is not particularly limited and may be appropriately selected according to the purpose, and it is possible to use the second liquid having an arbitrary viscosity by adjusting the temperature. However, for example, the viscosity is preferably from 3 mPa·s to 20 mPa·s, and more preferably from 6 mPa·s to 12 mPa·s at 25°.

When the viscosity is less than 3 mPa·s, the second liquid may be discharged unstably during object formation (may be discharged in a bent direction or may not be able to be discharged). When the viscosity is greater than 20 mPa·s, the second liquid may not be able to be discharged.

The viscosity can be measured with, for example, a rotary viscometer (VISCOMATE VM-150III manufactured by Toki Sangyo Co., Ltd.) at 25°C.

The three-dimensional object formation liquid set of the present invention can be used favorably for forming various three-dimensional objects, and can be used particularly favorably for a three-dimensional object formation method of the present invention, and a three-dimensional object, which are to be described below.

### [Three-Dimensional Object Formation Method of First Embodiment]

A three-dimensional object formation method of the first embodiment of the present invention includes a first step and a second step, and further includes other steps according to necessity.

The three-dimensional object formation method of the first embodiment repeats the above steps a plurality of times. The number of times of repeating is different depending on the size, shape, structure, etc. of the three-dimensional object to be formed, and cannot be determined flatly. However, when the thickness of each layer is in the range of from 10 µm to 50 µm, it is possible to form the object precisely without letting the layers peel. Hence, it is necessary to stack layers repeatedly up to the height of the three-dimensional object to be formed.

The three-dimensional object formation method of the first embodiment can efficiently form a soft object that is made of a hydrogel produced from a hydrogel precursor.

The steps of the three-dimensional object formation method of the first embodiment will be explained in detail below.

### <First Step>

The first step is a step of forming a film by delivering a first liquid containing water and a hydrogel precursor.

### -First Liquid-

The first liquid may be the same as the first liquid in the three-dimensional object formation liquid set.

The method for delivering the first liquid is not particularly limited, and an arbitrary method may be selected according to the purpose as long as it can apply liquid droplets to an intended position at an appropriate precision. Examples of the method include a dispenser method, a spray method, and an inkjet method. It is preferable to use publicly-known apparatuses in order to carry out these methods.

Among these, the dispenser method is excellent in liquid droplet quantitativity, but has a small coating coverage. The spray method can form minute discharged products easily, has a wide coating coverage and excellent coating performance, but has poor liquid droplet quantitativity, and may have a sprayed flow splashing. Therefore, the inkjet method is particularly preferable for the present invention. The inkjet method is preferable in that it is better than the spray method in liquid droplet quantitativity, has a wider coating coverage than that of the dispenser method, and can form a complex three-dimensional shape precisely and efficiently.

When the inkjet method is employed, there is provided a nozzle capable of discharging the first liquid. The nozzle may be preferably a nozzle of a publicly-known inkjet printer. Preferable examples of the inkjet printer include GEN 4 ⁽™⁾ manufactured by Ricoh Industry Company, Ltd. This inkjet printer is preferable in that it can perform coating at a high speed, because it can drop a large amount of ink at a time from a head portion thereof, and has a wide coating coverage.

### <Second Step>

The second step is a step of curing the film formed in the first step.

The cured film is preferably an organic-inorganic complexed hydrogel that contains water and components soluble in the water in a three-dimensional network structure that is formed by a water-soluble organic polymer being complexed with a water-swellable layered clay mineral.

The organic-inorganic complexed hydrogel has an improved tensibility, can be peeled or detached altogether without being broken, and can simplify the process after the object formation significantly.

The rubber hardness of the organic-inorganic complexed hydrogel is preferably from 6 to 60, and more preferably from 8 to 20.

When the rubber hardness is less than 6, the shape may collapse in the middle of the object formation. When the rubber hardness is greater than 60, the shape may be broken when peeled or detached after the object formation.

The rubber hardness can be measured with, for example, a durometer (GS-718N manufactured by Teclock Corporation).

Examples of a method for curing the film include an ultraviolet (UV) irradiation lamp, and an electron beam. It is preferable that the method for curing the film be provided with a mechanism configured to remove ozone.

Types of the ultraviolet (UV) irradiation lamp include a high-pressure mercury lamp, an ultrahigh-pressure mercury lamp, and a metal halide.

The ultrahigh-pressure mercury lamp is a point light source, whereas a Deep UV type combined with an optical system to improve light consumption efficiency can emit light of a short wavelength range.

The metal halide is effective for a colored product because it has a wide wavelength range. Examples thereof include halides of metals such as Pb, Sn, and Fe, which can be selected depending on the absorption spectrum of the photopolymerization initiator. The lamp used for curing is not particularly limited, and an arbitrary lamp may be selected according to the purpose. Examples thereof include commercially available products such as an H lamp, a D lamp, or a V lamp ⁽™⁾ manufactured by Fusion Systems Co., Ltd.

### <Other Steps>

Other steps are not particularly limited, and arbitrary steps may be selected according to the purpose. Examples thereof include a detaching step, a formed object polishing step, and a formed object cleaning step.

### [Three-Dimensional Object Formation Method of Second Embodiment]

A three-dimensional object formation method of the second embodiment of the present invention includes a first step, a third step, and a fourth step, preferably includes a fifth step, and further includes other steps according to necessity.

The three-dimensional object formation method of the second embodiment repeats the above steps a plurality of times. The number of times of repeating is different depending on the size, shape, structure, etc. of the three-dimensional object to be formed, and cannot be determined flatly. However, when the thickness of each layer is in the range of from 10 µm to 50 µm, it is possible to form the object precisely without letting the layers peel. Hence, it is necessary to stack layers repeatedly up to the height of the three-dimensional object to be formed.

In formation of a soft object made of a hydrogel produced from a hydrogen precursor by the three-dimensional object formation method of the second embodiment, the method uses a first liquid containing at least water and a hydrogel precursor as a liquid for forming the soft object, and uses a second liquid containing at least a curable monomer as a liquid for forming a supporter.

Conversely, when a desired object is a hard object, the method uses a second liquid containing at least a curable monomer as a liquid for forming the object, and uses a first liquid containing at least water and a hydrogel precursor as a liquid for forming a supporter.

Hence, the three-dimensional object formation method of the second embodiment can form objects having different desired hardnesses respectively, only by changing the liquids to apply. In any case, it is very easy to detach the supporter and the formed object from each other, because there is a hardness difference between them.

Further, it does not matter which of the first step and the third step to perform first. However, it is preferable to perform the third step first, because the supporter can be formed first.

Each step of the three-dimensional object formation method of the second embodiment will be explained in detail below.

### <First Step>

This step is the same as the first step of the three-dimensional object formation method of the first embodiment. Therefore, explanation of this step will be skipped.

### <Third Step>

The third step is a step of forming a film by delivering a second liquid containing at least a curable material to a position different from the position to which the first liquid is delivered.

### -Second Liquid-

The second liquid may be the same as the second liquid in the three-dimensional object formation liquid set.

The "position different from the position to which the first liquid is delivered" means that the position to which the second liquid is delivered and the position to which the first liquid is delivered do not coincide with each other, which means that the position to which the second liquid is delivered and the position to which the first liquid is delivered may adjoin each other.

The method for delivering the second liquid is the same as the method for delivering the first liquid described above. Therefore, explanation of the method will be skipped.

### <Fourth Step>

The fourth step is a step of curing the films formed in the first step and the third step.

The film formed in the first step and the film formed in the third step may be cured simultaneously or separately.

It is preferable that the cured film be an organic-inorganic complexed hydrogel that contains water and components soluble in the water in a three-dimensional network structure that is formed by a water-soluble organic polymer being complexed with a water-swellable layered clay mineral, because when removing the supporter after the object formation, it is possible to detach the supporter automatically only by letting it undergo drying shrinkage.

The organic-inorganic complexed hydrogel has an improved tensibility, can be peeled or detached altogether without being broken, and can simplify the process after the object formation significantly.

The method for curing the films is the same as the curing method used in the second step described above. Therefore, explanation of the method will be skipped.

### <Fifth Step>

The fifth step is a step of detaching the portion made of the hydrogel produced from the hydrogel precursor, and the portion made of the polymer produced from the curable material from each other.

The rubber hardness of the portion made of the hydrogel is preferably from 6 to 60, and more preferably from 8 to 20.

When the rubber hardness is less than 6, the shape may collapse in the middle of the object formation. When the rubber hardness is greater than 60, the shape may be broken when peeled or detached after the object formation.

The rubber hardness can be measured with, for example, a durometer (GS-718N manufactured by Teclock Corporation).

The portion made of the hydrogel and the portion made of the polymer can be detached from each other through drying shrinkage.

The drying shrinkage can occur according to various methods such as a method of leaving them in a 50°C atmosphere, and a method of reducing pressure.

### <Other Steps>

Other steps are not particularly limited, and arbitrary steps may be selected according to the purpose. Examples thereof include a formed object cleaning step and a formed object polishing step.

As explained above, in the three-dimensional object formation method of the present invention, the liquid is discharged through minute pores according to an inkjet method, a dispenser method, etc. Hence, the liquid can be applied in a manner to allow each layer to have an image formed thereon sequentially layer by layer, and the first liquid and the second liquid before cured are distinctly separated from each other at their interface, being in an unmixed incompatible state.

According to conventional object formation methods, a first liquid and a second liquid are compatibilized at their interface, and have an unclear boundary between them when photo-cured. As a result, the formed object will have minute undulations on its surface. However, according to the three-dimensional object formation method of the present invention, the first liquid and the second liquid are kept in an incompatible state and have a clear boundary between them after photo-cured. Further, the formed object and the supporter have a hardness difference, and hence have an improved detachment property. Hence, the object will have an improved surface smoothness, and it becomes possible to skip or significantly reduce the polishing step after the object formation.

### <Embodiment>

A specific embodiment of the three-dimensional object formation method of the present invention will be explained below.

A soft hydrogel object is obtained, using a soft object material as the first liquid (object composition), and a hard object material as the second liquid (supporter composition).

As described above, in order to obtain a soft three-dimensional object, a soft object material is deposited at the object portion, and a hard object material is deposited at the supporter portion. In order to obtain a hard three-dimensional object, a hard object material is deposited at the object portion, and a soft object material is deposited at the supporter portion conversely.

The method for delivering the liquids may be an inkjet method or a disperser method, as long as they can apply liquid droplets to an intended position with an appropriate precision. Substantially the same embodiment is applicable to either case. Hence, the following explanation will mainly focus on the case of using an inkjet method as the method for delivering the liquids.

First, surface data or solid data of a three-dimensional shape that is designed with a three-dimensional CAD or taken in with a scanner or a digitizer is converted to STL format data and input into a layer stacking object forming apparatus.

Based on the input data, the dimension of the three-dimensional object to be formed along which the object is to be formed is determined. The object forming dimension is not particularly limited, but it is common to select the shortest dimension of the three-dimensional object along which the three-dimensional object can be the lowest in n a Z-direction (height direction).

When the object forming dimension is determined, project areas of the three-dimensional shape on an X-Y plane, an X-Z plane, and a Y-Z plane are calculated. In order to reinforce the obtained block shape, its surfaces except for the top surface in the X-Y plane are moved outwards by an appropriate amount. The amount of moving is not particularly limited, and varies depending on the shape, size, materials used, etc. However, it is from about 1 mm to 10 mm. As a result, a block shape enclosing therein the shape to be formed (but opened at the top surface) is defined.

This block shape is sliced in the Z-direction at one-layer-thickness intervals. The thickness of one layer varies depending on the materials used, and cannot be determined flatly. However, it is preferably from 10 µm to 50 µm. When there is only one object to be formed, this block shape is arranged in the center of a Z stage (which is a table on which the object is put and that is lifted down by the thickness of one layer each time a layer is formed). When a plurality of objects are to be formed simultaneously, respective block shapes are arranged on the Z stage, but they may also be stacked one above another. It is also possible to process the generation of block shapes and slice data (contour line data) and the arrangement on the Z stage automatically, upon designation of the materials to be used.

The next step is the object forming step. The positions to which a soft object material is to be jetted and the positions to which a hard object material is to be jetted are controlled according to in/out determination (i.e., determination of which of the soft object material and the hard object material is to be jetted to the positions on a contour line) based on the outermost contour line among the slice data.

The jetting order is the hard object material for forming a supporter layer first, and the soft object material for forming the object next.

In such a jetting order, the supporter that is formed first constitutes a pooling portion such as a groove or a dam, and the soft object material is to be jetted into the pooling portion. Hence, there is no risk of liquid dripping, even when a material that is liquid at normal temperature is used as the soft object material, which allows use of a wide range of materials such as photo-curable resins and thermosetting resins.

In order to save the time taken for object formation, a suitable method is to jet and stack up the soft object material and the hard object material in both of the outward path and homeward path of an integrated head.

Furthermore, by providing an active energy ray irradiator next to the inkjet head for jetting the soft object material, it is possible to cut out the time taken for a smoothing process, which enables high-speed object formation.

### <Object Forming Apparatus>

An object forming apparatus 39 is configured to jet the soft object material from an object jetting head unit 30 and the hard object material from supporter jetting head units 31 and 32 using a head unit including an array of inkjet heads, and to stack layers of the materials by curing them with ultraviolet irradiators 33 and 34 provided adjacently.

That is, the apparatus jets the hard object material from the inkjet heads (supporter jetting head units 31 and 32) and solidifies the hard object material to form a first supporter layer including a pooling portion, jets the liquid-state soft object material composed of an active energy ray-curable compound from the inkjet head (object jetting head unit 30) into the pooling portion of the first support layer, and irradiates the soft object material with an active energy ray to form a first object layer, jets the melt hard object material over the first supporter layer and solidifies it to stack up a second supporter layer including a pooling portion, and jets the liquid-state soft object material composed of an active energy ray-curable compound into the pooling portion of the second supporter layer, and irradiates the soft object material with an active energy ray to form a second object layer over the first object layer, to thereby form a three-dimensionally layer-stacked object 35.

When the multi-head unit is to move in the direction of an arrow A, basically, the supporter jetting head unit 31, the object jetting head unit 30, and the ultraviolet irradiator 34 are used to form a supporter 36 and an object 35 over an object support substrate 37. The supporter jetting head unit 32 and the ultraviolet irradiator 33 may be used supplementarily.

When the multi-head unit is to move in the direction of an arrow B, basically, the supporter jetting head unit 32, the object jetting head unit 30, and the ultraviolet irradiator 33 are used to form a supporter 36 and an object 35 over an object support substrate 37. The supporter jetting head unit 31 and the ultraviolet irradiator 34 may be used supplementarily.

In order to keep the jetting head units 30, 31, and 32, and the ultraviolet irradiators 33 and 34 at a constant gap from the object 35 and the supporter 36, the layers are stacked while a stage 38 is lifted down in accordance with the number of layers stacked.

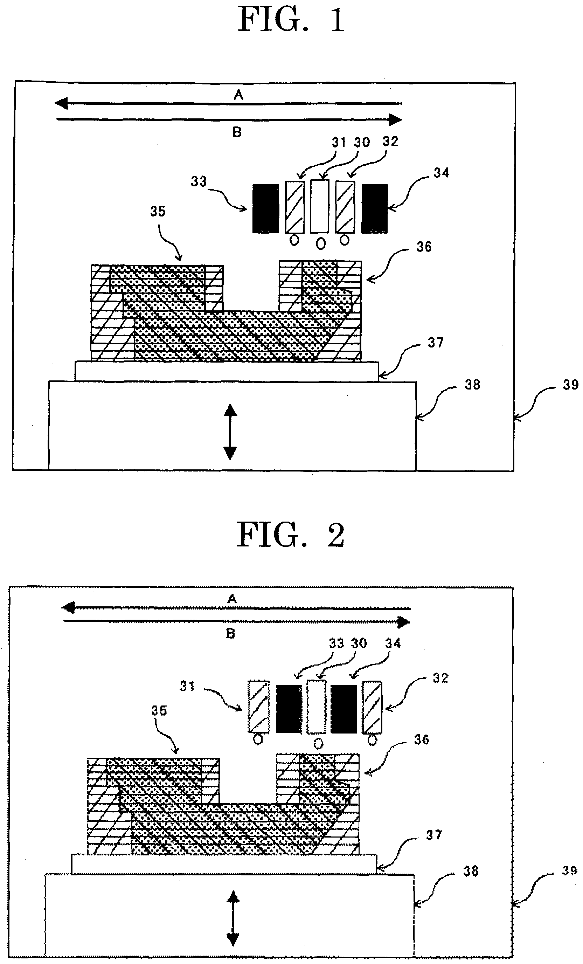

Fig. 2 is a schematic diagram showing another example of an object forming step according to which smoothness of each layer can be better than in Fig. 1. The basic configuration is the same as in Fig. 1, but the difference is that the ultraviolet irradiators 33 and 34 are disposed between the object material jetting head 30 and the support material jetting heads 31 and 32, respectively.

The object forming apparatus 39 having this configuration uses the ultraviolet irradiators 33 and 34 in both of the cases when moving in the direction of an arrow A and when moving in the direction of an arrow B. Heat generated from ultraviolet irradiation smooths the surface of a stacked layer of the hard object material, which consequently improves the dimensional stability of the object.

The object forming apparatus 39 may include a liquid recovery/recycling mechanism or the like. It may also include a blade for removing an ink composition adhered to a nozzle surface, and a mechanism for detecting any non-dischargeable nozzle. Furthermore, it is also preferable to control the temperature inside the apparatus during the object formation.

### (Three-Dimensional Object)

A three-dimensional object is made of a hydrogel that contains water in a three-dimensional network structure that is formed by a water-soluble organic polymer being complexed with a water-dispersible mineral, and further contains other components according to necessity.

The rubber hardness of a portion made of the hydrogel is preferably from 6 to 60.

The rubber hardness can be measured with, for example, a durometer (GS-718N ⁽™⁾ manufactured by Teclock Corporation).

The three-dimensional object is used favorably as an organ model for medical procedures training used for surgical simulation.

In order to impart a mechanical strength and elasticity comparable to that of an organ to the organ model for medical procedures training, it is possible to form the model with a gel composition liquid containing a water-soluble organic polymer and a water-dispersible mineral. It is also possible to use a gel composition that contains a polymerizable monomer which can be polymerized to a water-soluble organic polymer, and a water-dispersible mineral. In this case, the gel composition is compositionally the same as the first liquid.

The organ model for medical procedures training must contain a hydrogel that contains water in a three-dimensional network structure formed by a water-soluble organic polymer being complexed with a water-dispersible mineral. In this case, by changing the content ratio of the water-soluble organic polymer and the water-dispersible mineral, it is possible to reproduce organ information such as an appropriate hardness, viscoelasticity, color, etc. faithfully. That is, the organ model can retain a mechanical strength and have elasticity comparable to that of an organ, by containing an organic-inorganic complexed hydrogel that contains water in a three-dimensional network structure formed by the water-soluble organic polymer being complexed with the water-dispersible mineral. Further, by having the configuration described above, the organic-inorganic complexed hydrogel can have an improved tensibility. Furthermore, the organ model can give a touch comparable to that of an organ, and can feel very similar to an organ when it is cut with a scalpel blade or the like.

### [Gel Composition Liquid]

The gel composition liquid contains a water-soluble organic polymer or a polymerizable monomer that can be polymerized to the water-soluble organic polymer, and a water-dispersible mineral, preferably contains water, and further contains other components according to necessity. The mineral is preferably a water-swellable layered clay mineral.

Where appropriate, it is preferable to impart an anti-drying property to the organ model for medical procedures training, when it is feared that the organ model that contains water may dry to have mechanistic properties thereof changed or may become unsanitary with propagation of mold.

A first method for imparting the anti-drying property is to apply a moisture retaining coating over the outer circumference of the formed organ model. The method for forming the moisture retaining coating is not particularly limited, and an arbitrary method may be selected according to the purpose. Examples include a method of impregnating the organ model with a 0.01% by mass aqueous solution of a highly humectant polysaccharide (TREMOIST-TP ⁽™⁾ manufactured by Matsumoto Trading Co., Ltd.) at 40°C for 30 minutes and then drying it to thereby form a thin coating film, a method of applying a nonvolatile component such as an oil over the surface of the organ model, and a method of immersing the organ model in a water-soluble organic medium having a high boiling point described below.

A second method for imparting the anti-drying property is to add a water-soluble organic medium having a high boiling point in the gel composition liquid.

Examples of the water-soluble organic medium having a high boiling point include: alkyl alcohols having 1 to 4 carbon atoms such as methyl alcohol, ethyl alcohol, n-propyl alcohol, isopropyl alcohol, n-butyl alcohol, sec-butyl alcohol, and tert-butyl alcohol; amides such as dimethyl formamide, and dimethyl acetamide; ketones or ketone alcohols such as acetone, methyl ethyl ketone, and diacetone alcohol; ethers such as tetrahydrofuran, and dioxane; multivalent alcohols such as ethylene glycol, propylene glycol, 1,2-propanediol, 1,2-butanediol, 1,3-butanediol, 1,4-butanediol, diethylene glycol, triethylene glycol, 1,2,6-hexanetriol, thioglycol, hexylene glycol, and glycerin; polyalkylene glycols such as polyethylene glycol, and polypropylene glycol; lower alcohol ethers of multivalent alcohol, such as ethylene glycol monomethyl (or ethyl) ether, diethylene glycol methyl (or ethyl) ether, and triethylene glycol monomethyl (or ethyl) ether; alkanol amines such as monoethanol amine, diethanol amine, and triethanol amine; N-methyl-2-pyrrolidone; 2-pyrrolidone; and 1,3-dimethyl-2-imidazolidinone. One of these may be used alone, or two or more of these may be used in combination. Among these, multivalent alcohols are preferable, and glycerin is more preferable in terms of the moisture retaining property.

The content of the water-soluble organic medium having a high boiling point in the gel composition liquid is not particularly limited, and may be appropriately selected according to the purpose. However, it is preferably from 5% by mass to 60% by mass.

### <Other Components>

The gel composition liquid may contain other components such as an antiseptic agent, a colorant, an aroma chemical, and an antioxidant, within the range of concentrations in which they do not disturb the object of the present invention.

Examples of the antiseptic agent include a dehydroacetic salt, a sorbic salt, a benzoic salt, pentachlorophenol sodium, 2-pyridinethiol-1-oxide sodium, 2,4-dimethyl-6-acetoxy-m-dioxane, and 1,2-benzthiazolin-3-one.

By using a colorant, it is possible to color the organ model in a color similar to that of an organ of a human body.

It is preferable that the organ model for medical procedures training have inside at an intended position, an inclusion (an internal structure) that has either a different color or a different hardness from that of the organ model. This can be used as a model based on which to confirm before a medical operation, the position to which to insert a scalpel blade.

Examples of the inclusion include a blood vessel, a tract, a mimic of a lesional area, etc., a cavity, and a plica.

It is possible to adjust the hardness by, for example, changing the content of the water-swellable layered clay mineral in the gel composition liquid.

It is possible to adjust the color by, for example, adding a colorant in the gel composition liquid.

The colorant is not particularly limited, and an arbitrary colorant may be selected according to the purpose. Examples include a dye, and a pigment.

As the dye and the pigment, it is possible to use those that are listed for the second liquid included in the three-dimensional object formation liquid set of the present invention.

The additive amount of the colorant is not particularly limited, and may be appropriately selected according to the purpose. However, it is preferably from 0.1% by mass to 5% by mass relative to the whole amount of the gel composition liquid.

### <Method for Forming Organ Model for Medical Procedures Training>

A method for forming the organ model for medical procedures training is not particularly limited, and an arbitrary method may be selected according to the purpose. However, it is generally necessary to reproduce a complex shape as the organ model, and in addition, to interlace the organ model with a plurality of characteristically different portions. Hence, a formation method described below is preferable.

For example, a preferable method is to form a mold with an appropriate fabrication method, inject a gel composition liquid into the mold, and cure the gel composition liquid. Further, an inclusion such as a blood vessel may be formed separately, and placed at a predetermined position of the mold.

It is preferable to form the mold and the inclusion such as a blood vessel, by processing a metal or a resin by cutting or optical modeling or with a 3D printer or the like.

It is also possible to employ a method of stacking layers of a hydrogel precursor liquid, and if necessary, of a supporter liquid, with a modeling apparatus called 3D printer.

More specifically, in terms of forming the shape precisely, a method of forming the organ model by discharging a gel composition liquid with a material jet modeling apparatus employing an inkjet method is preferable, and a formation method using the first liquid and the second liquid described above is particularly preferable.

The organ model for medical procedures training is not particularly limited, and any internal organ in a human body may be reproduced. Examples thereof include a brain, a heart, an esophagus, a stomach, a bladder, a small bowel, a large bowel, a liver, a kidney, a pancreas, a spleen, and a uterus.

Further, the organ model for medical procedures training can reproduce internal structures such as a blood vessel and a lesional area faithfully, can give very similar feels as those of a desired organ when touched or cut, and can be incised with a scalpel blade. Therefore, the organ model for medical procedures training is suitable as an organ model for medical procedures training for a doctor, a doctor-in-training, a medical student, etc. in a medical faculty of a college, a hospital, etc., as an organ model for scalpel blade bite testing for testing bite of a produced scalpel blade before it is shipped, and as an organ model for confirming bite of a scalpel blade before a medical operation.

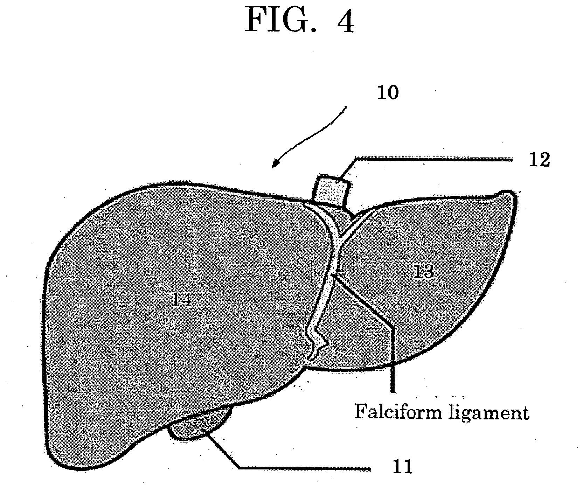

Explanation will now be given below using as the organ model for medical procedures training, a liver model shown in Fig. 4.

Liver is the biggest organ in a human body that is positioned at a right-hand side of the upper abdominal region below a rib bone, and weighs from 1.2 kg to 1.5 kg in an adult human. It plays important roles including "metabolization" of transforming nutrients taken in from foods to a form consumable by the body, or storing and supplying nutrients, "detoxification" of neutralizing toxins, and secretion of bile that helps decomposition and absorption of fat, etc.

As shown in Fig. 4, a liver 10 is divided into a left lobe 13 and a right lobe 14 by a major dividing plane (Cantlie line, not shown) that connects a gallbladder 11 with an inferior vena cava 12.

Hepatectomy is an operation of resecting a portion of the liver. Hepatectomy is indicated for liver cancer (primary liver cancer) mostly, and for metastatic liver cancer, benign hepatic tumor, and hepatic trauma.

Depending on the resection manner, hepatectomy is classified into partial resection, subsegmentectomy, segmentectomy, lobectomy, extended lobectomy, trisegmentectomy, etc. The liver is not marked for such segments or portions. In an operation, a portal vein and a hepatic artery through which such segments are nourished are tied off, or a dye is injected into a blood vessel, in order for their boundaries to be located based on changes in colors. Then, the liver is resected with various devices such as an electric scalpel, a harmonic scalpel (ultrasonic surgical instrument), CUSA (ultrasonic surgical aspirator), and microtase (ultrasonic surgical device).

For surgical simulation for such cases, it is possible to favorably use the organ model for medical procedures training of the present disclosure that can reproduce internal structures such as a blood vessel and a lesional area faithfully, can give very similar feels as those of a desired organ when touched or cut, and can be incised with a scalpel blade.

### Examples

Examples of the present invention will now be explained below. The present invention is not limited to these Examples by any means.

Explained below are specific Examples of layer stacking object formation, in which layers of a soft object material as a first liquid and a hard object material as a second liquid were stacked up sequentially one layer to another.

In the Examples below, objects made of a soft hydrogel were formed, using a soft object material as a first liquid (object composition), and using a hard object material as a second liquid (supporter composition).

### (Example 1)

### <Production of Hard Object Material>

A total of 300 g of urethane acrylate (product name: DIABEAM UK6038 ⁽™⁾ manufactured by Mitsubishi Rayon Co., Ltd.) as a curable material (10 parts by mass), neopentyl glycol hydroxypivalic acid ester di(meth)acrylate (product name: KAYARAD MANDA ⁽™⁾ manufactured by Nippon Kayaku Co., Ltd.) as a curable material (90 parts by mass), a photopolymerization initiator (product name: IRGACURE 184 ⁽™⁾ manufactured by BASF Ltd.) (3 parts by mass), and a blue pigment (product name: LIONOL BLUE 7400G ⁽™⁾ manufactured by Toyo Ink Co., Ltd.) as a colorant (2 parts by mass) were dispersed with a homogenizer (HG30 ⁽™⁾ manufactured by Hitachi Koki Co., Ltd.) at a rotation speed of 2,000 rpm until a homogeneous mixture was obtained. Then, the mixture was filtered to remove impurities, etc., and subjected finally to vacuum deaeration for 10 minutes, to thereby obtain a homogenous hard object material.

The surface tension and viscosity of the obtained hard object material were measured in the manners described below. The surface tension was 27.1 mN/m, and the viscosity was 10.1 mPa·s at 25°C.

### [Surface Tension Measurement]

The surface tension of the obtained hard object material was measured with a surface tensiometer (AUTOMATIC CONTACT ANGLE GAUGE DM-701 ⁽™⁾ manufactured by Kyowa Interface Science Co., Ltd.) according to a hanging drop method.

### [Viscosity Measurement]

The viscosity of the obtained hard object material was measured with a rotary viscometer (VISCOMATE VM-150III ⁽™⁾ manufactured by Toki Sangyo Co., Ltd.) at 25.0°C.

### <Production of Soft Object Material>

In the following, ion-exchanged water subjected to pressure reducing deaeration for 10 minutes was used as pure water.

### -Preparation of Initiator Liquid-

(A) As an initiator liquid 1, a photopolymerization initiator (IRGACURE 184 ⁽™⁾ manufactured by BASF Ltd.) (2 parts by mass) was dissolved in methanol (98 parts by mass), and prepared as a solution.
(B) As an initiator liquid 2, sodium peroxodisulfate (manufactured by Wako Pure Chemical Industries, Ltd.) (2 parts by mass) was dissolved in pure water (98 parts by mass), and prepared as an aqueous solution.

### -Preparation of Soft Object Material-

First, as a water-swellable layered clay mineral, synthetic hectorite having a composition of [Mg_{5.34}Li_{0.66}Si₈O₂₀(OH)₄]Na-_{0.66} (LAPONITE XLG ⁽™⁾ manufactured by Rockwood Holdings, Inc.) (8 parts by mass) was added little by little into pure water (195 parts by mass) that was being stirred, and stirred and prepared as a dispersion liquid.

Next, as a polymerizable monomer, N,N-dimethyl acrylamide (manufactured by Wako Pure Chemical Industries, Ltd.) (20 parts by mass) that was passed through an active alumina column in order for a polymerization inhibitor to be removed was added to the obtained dispersion liquid. Further, as a surfactant, sodium dodecyl sulfate (manufactured by Wako Pure Chemical Industries, Ltd.) (0.2 parts by mass) was added and mixed with the dispersion liquid.

Next, while the dispersion liquid was cooled in an ice bath, the (A) initiator liquid 1 described above (0.5 parts by mass) was added thereto, and the (B) initiator liquid 2 described above (5 parts by mass) was added thereto. They were stirred and mixed, and then subjected to pressure reducing deaeration for 10 minutes. Subsequently, the resulting dispersion liquid was filtered to remove impurities, etc., to thereby obtain a homogeneous soft object material.

The surface tension of the obtained soft object material measured in the same manner as for the hard object material was 34.4 mN/m, and the viscosity thereof measured in the same manner as for the hard object material was 12.2 mPa·s at 25.0°C.

### <Layer Stack Formation and Detachment>

The hard object material and the soft object material were each filled into two inkjet heads (GEN4 ⁽™⁾ manufactured by Ricoh Industry Co.) and jetted.

Formation of an object and a supporter was performed while irradiating the hard object material and the soft object material with a light volume of 350 mJ/cm² using an ultraviolet irradiator (SPOT CURE SP5-250DB ⁽™⁾ manufactured by Ushio Inc.).

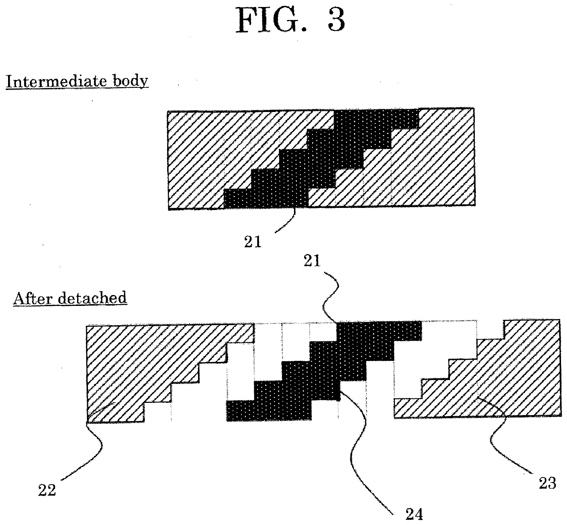

Specifically, as shown in Fig. 3A, a staircase-like object 21 and supporters 22 and 23 having such a shape as covering the staircase were formed with an inkjet optical modeling apparatus shown in Fig. 1. Immediately after the object 21 was formed, the supporter 22 was withdrawn horizontally so that it may be detached. As a result, the supporter 22 was detached as an unbroken whole, and the object 21 was completed without necessity of any further subsequent process.

A test of detaching the other supporter 23 was performed by leaving the supporter 23 at room temperature for 5 hours. After the detaching test, the object 21 was completely separate from the supporter 23 that had undergone drying shrinkage, and the supporter was detached as an unbroken whole. Hence, detachment was also successful by mere leaving and drying.

A surface 24 of the object after detached was observed. It did not have even a minute residue of the supporters, and was formed as a smooth surface.

Separately, the soft object material was poured into a mold, capped with glass and sealed air-tightly, and photo-cured in the same manner as described above, to thereby form a circular-columnar pellet-shaped sample segment (hydrogel) having a diameter of 20 mm and a thickness of 4 mm.

The rubber hardness of the obtained sample segment measured in the manner described below was 16.

### [Rubber Hardness Measurement]

With a durometer (GS-718N ⁽™⁾ manufactured by Teclock Corporation), a probe was indented into the center of the surface having the diameter of 20 mm, and 15 seconds later, the rubber hardness was measured according to a method compliant with ISO7691 (Type A).

### (Example 2)

A soft object material was produced in the same manner as in Example 1, except that a dispersion liquid was produced by changing the additive amount of synthetic hectorite (LAPONITE XLG ⁽™⁾ manufactured by Nippon Silica Industrial Co., Ltd.) in the soft object material from that of Example 1 to 4 parts by mass. Layer stacking object formation was performed in the same manner as in Example 1, and detachment was also performed in the same manner as in Example 1.

The viscosity of the obtained soft object material measured in the same manner as for the hard object material of Example 1 was 6.8 mPa·s at 25.0°C, and the surface tension thereof was 34.4 mN/m, which was equal to that of Example 1.

A sample segment (hydrogel) of the soft object material was formed in the same manner as in Example 1, and the rubber hardness thereof measured was 24.

Also in Example 2, a supporter and the object became completely separate after withdrawing detachment, and the object was detached as an unbroken whole, as in Example 1. Further, leaving at normal temperature for 5 hours for drying also ended in proper detachment.

A surface of the object after detached was observed. It did not have even a minute residue of the supporters, and was formed as a smooth surface.

### (Example 3)

A soft object material was produced in the same manner as in Example 1, except that a dispersion liquid was produced by changing the additive amount of synthetic hectorite (LAPONITE XLG ⁽™⁾ manufactured by Nippon Silica Industrial Co., Ltd.) in the soft object material from that of Example 1 to 12 parts by mass. Layer stacking object formation was performed in the same manner as in Example 1, and detachment was also performed in the same manner as in Example 1.

The viscosity of the obtained soft object material measured in the same manner as for the hard object material of Example 1 was 17.6 mPa·s at 25.0°C, and the surface tension thereof was 34.4 mN/m, which was equal to that of Example 1.

A sample segment (hydrogel) of the soft object material was formed in the same manner as in Example 1, and the rubber hardness thereof measured was 10.

Also in Example 3, a supporter and the object became completely separate after withdrawing detachment, and the object was detached as an unbroken whole, as in Example 1. Further, leaving at normal temperature for 5 hours for drying also ended in proper detachment.

A surface of the object after detached was observed. It did not have even a minute residue of the supporters, and was formed as a smooth surface.

### (Example 4)

A soft object material was produced in the same manner as in Example 1, except that the polymerizable monomer in the soft object material was changed from that of Example 1 to N-isopropyl acrylamide (manufactured by Wako Pure Chemical Industries, Ltd.). Layer stacking object formation was performed in the same manner as in Example 1, and detachment was also performed in the same manner as in Example 1.

The viscosity of the obtained soft object material measured in the same manner as for the hard object material of Example 1 was 10.3 mPa·s at 25.0°C, and the surface tension thereof was 34.4 mN/m, which was equal to that of Example 1.

A sample segment (hydrogel) of the soft object material was formed in the same manner as in Example 1, and the rubber hardness thereof measured was 14.

Also in Example 4, a supporter and the object became completely separate after withdrawing detachment, and the object was detached as an unbroken whole, as in Example 1. Further, leaving at normal temperature for 5 hours for drying also ended in proper detachment.

A surface of the object after detached was observed. It did not have even a minute residue of the supporters, and was formed as a smooth surface.

### (Example 5)

Layer stacking object formation was performed in the same manner as in Example 1 with the same soft object material and hard object material as those of Example 1. Detachment was also performed in the same manner as in Example 1.

Also in Example 5, a supporter and the object became completely separate after withdrawing detachment, and the object was detached as an unbroken whole, as in Example 1. Furthermore, separately, detachment was performed by heating and drying at 50°C for 2 hours, which resulted in complete detachment of the supporter in about 10 minutes.

A surface of the object after detached was observed. It did not have even a minute residue of the supporters, and was formed as a smooth surface.

### (Comparative Example 1)

A soft object material was produced in the same manner as in Example 1, except that unlike in Example 1, synthetic hectorite was not added in the soft object material, but instead of synthetic hectorite, an equal amount of N,N'-methylenebisacrylamide (manufactured by Wako Pure Chemical Industries, Ltd.) was added. Layer stacking object formation was performed in the same manner as in Example 1, and detachment was also performed in the same manner as in Example 1. Note that in Comparative Example 1, no hydrogel precursor could be obtained, and no hydrogel could be obtained, either.

The viscosity of the obtained soft object material measured in the same manner as for the hard object material of Example 1 was 8.0 mPa·s at 25.0°C, and the surface tension thereof was 34.4 mN/m, which was equal to that of Example 1.

A sample segment of the soft object material was formed in the same manner as in Example 1, and the rubber hardness thereof measured was 5.

In Comparative Example 1, a supporter crumbled brittly upon withdrawing detachment, but could be detached completely only by being scratched lightly with a brush. Further, after left at normal temperature for 5 hours for drying, most of a supporter could be detached, and a partial remnant of the supporter could be detached completely only by being scratched lightly with a brush. However, it turned out that the soft object could not endure the weights of the supporters and partially collapsed in the middle of the layer stacking object formation. Hence, an intended object could not be obtained.

Tables 1 to 3 show property evaluations of the soft object material, the hard object material, and the soft objects collectively.

**Table 1-1**

| | Soft object material | | | | | | |
|---|---|---|---|---|---|---|---|
| | Layered clay mineral | | Polymerizable monomer | | Surfactant | Initiator liquid 1 | Initiator liquid 2 |
| | Kind | Additive amount (part by mass) | Kind | Additive amount (part by mass) | Dodecyl sulfate Na (part by mass) | IRGACURE 184 (part by mass) | Peroxo-disulfate Na (part by mass) |
| Ex. 1 | XLG | 8 | DMA | 20 | 0.2 | 0.5 | 5 |
| Ex. 2 | XLG | 4 | DMA | 20 | 0.2 | 0.5 | 5 |
| Ex. 3 | XLG | 12 | DMA | 20 | 0.2 | 0.5 | 5 |
| Ex. 4 | XLG | 8 | IPAM | 20 | 0.2 | 0.5 | 5 |
| Ex. 5 | XLG | 8 | DMA | 20 | 0.2 | 0.5 | 5 |
| Comp. Ex. 1 | - | - | DMA | 28 | 0.2 | 0.5 | 5 |

**Table 1-2**

| | Soft object material | |
|---|---|---|
| | Viscosity (mPa·s) | Surface tension (mN/m) |
| Ex. 1 | 10.1 | 34.4 |
| Ex. 2 | 6.8 | 34.4 |
| Ex. 3 | 17.6 | 34.4 |
| Ex. 4 | 10.3 | 34.4 |
| Ex. 5 | 10.1 | 34.4 |
| Comp. Ex. 1 | 8.0 | 34.4 |

| | | |
|---|---|---|
| *DMA: N,N-dimethyl acrylamide (manufactured by Wako Pure Chemical Industries, Ltd.) * IPAM: N-isopropyl acrylamide (manufactured by Wako Pure Chemical Industries, Ltd.) | | |

**Table 2-1**

| | Hard object material | | | | | |
|---|---|---|---|---|---|---|
| | Curable material | | | | Photopolymerization initiator | Blue pigment |
| | Kind | Additive amount (part by mass) | Kind | Additive amount (part by mass) | KAYARAD MANDA (part by mass) | LIONOL BLUE 7400G (part by mass) |
| Ex. 1 | UK 6038 | 10 | MANDA | 90 | 3 | 2 |
| Ex. 2 | UK 6038 | 10 | MANDA | 90 | 3 | 2 |
| Ex. 3 | UK 6038 | 10 | MANDA | 90 | 3 | 2 |
| Ex. 4 | UK 6038 | 10 | MANDA | 90 | 3 | 2 |
| Ex. 5 | UK 6038 | 10 | MANDA | 90 | 3 | 2 |
| Comp. Ex. 1 | LTK 6038 | 10 | MANDA | 90 | 3 | 2 |

**Table 2-2**

| | Hard object material | |
|---|---|---|
| | Viscosity (mPa·s) | Surface tension (mN/m) |
| Ex. 1 | 10.1 | 27.1 |
| Ex. 2 | 10.1 | 27.1 |
| Ex. 3 | 10.1 | 27.1 |
| Ex. 4 | 10.1 | 27.1 |
| Ex. 5 | 10.1 | 27.1 |
| Comp. Ex. 1 | 10.1 | 27.1 |

| | | |
|---|---|---|
| *UK6038: urethane acrylate (product name: DIABEAM UK6038 manufactured by Mitsubishi Rayon Co., Ltd.) *MANDA: neopentyl glycol hydroxypivalic acid ester di(meth)acrylate (product name: KAYARAD MANDA manufactured by Nippon Kayaku Co., Ltd.) | | |

**Table 3**

| | Rubber hardness of object | Withdrawing detachment | Detachment after drying | Surface property of object after detached | Object formability |
|---|---|---|---|---|---|
| Ex. 1 | 16 | A | A | A | A |
| Ex. 2 | 24 | A | A | A | A |
| Ex. 3 | 10 | A | A | A | A |
| Ex. 4 | 14 | A | A | A | A |
| Ex. 5 | 16 | B | A (heating drying) | A | A |
| Comp. Ex. 1 | 5 | B | B | A | c |

| | | | | | |
|---|---|---|---|---|---|
| *In Table 3, evaluation criteria for all of "withdrawing detachment", "detachment after drying", "surface property of object after detached", and "object formability" were A for good, B for ordinary, and C for bad. | | | | | |

### (Example 6)

### <Preparation of Gel Composition Liquid>

In the following, ion-exchanged water subjected to pressure reducing deaeration for 10 minutes was used as pure water.

First, as an initiator liquid, sodium peroxodisulfate (manufactured by Wako Pure Chemical Industries, Ltd.) (2 parts by mass) was dissolved in pure water (98 parts by mass), and prepared as an aqueous solution.

Next, as a water-swellable layered clay mineral, synthetic hectorite having a composition of [Mg_{5.34}Li_{0.66}Si₈O₂₀(OH)₄]Na-_{0.66} (LAPONITE XLG ⁽™⁾ manufactured by Rockwood Holdings, Inc.) (8 parts by mass) was added little by little into pure water (195 parts by mass) that was being stirred, and stirred and prepared as a dispersion liquid.

Next, as a polymerizable monomer, N,N-dimethyl acrylamide (manufactured by Wako Pure Chemical Industries, Ltd.) (20 parts by mass) that was passed through an active alumina column in order for a polymerization inhibitor to be removed was added to the dispersion liquid.

Next, as a surfactant, sodium dodecyl sulfate (manufactured by Wako Pure Chemical Industries, Ltd.) (0.2 parts by mass) was added and mixed with the dispersion liquid.

Next, while the obtained mixture liquid was cooled in an ice bath, tetramethyl ethylene diamine (manufactured by Wako Pure Chemical Industries, Ltd.) (0.1 parts by mass) was added thereto.

Next, the initiator liquid described above (5 parts by mass) was added thereto, and stirred and mixed. After this, the mixture liquid was subjected to pressure reducing deaeration for 10 minutes, to thereby obtain a homogeneous gel composition liquid.

### <Formation of Gel Object>

The obtained gel composition liquid was poured into a mold described below, kept stationary at 25°C for 20 hours, and taken out from the mold, to thereby obtain a liver model, which was the intended gel object.

### <<Formation of Mold>>

A mold was formed by applying and processing three-dimensional model data of a liver, using AGILISTA ⁽™⁾ manufactured by Keyence Corporation as an inkjet optical modeling apparatus.

### <Evaluation>

As a result of hearing with five skilled surgeons, the obtained liver model reproducing the outer shape of a liver acquired evaluations as a lifelike reproduction in terms of both of elasticity and a feel when cut with a scalpel blade from all of the five surgeons.

### (Example 7)

In the process of forming a liver model according to the method described in Example 6, a blood vessel was formed with the inkjet optical modeling apparatus and colored such that it could be distinguished as a blood vessel. After this blood vessel was fixed at a portion of the mold, the same gel composition liquid as in Example 6 was poured into the mold. When the gel object was taken out from the mold finally, the blood vessel was left in the organ model in a state of being embraced as an inclusion. In this way, a liver model embracing a blood vessel was formed.

### <Evaluation>

The obtained liver model reproduced an accurate position of a blood vessel inside a transparent real organ. Therefore, it acquired evaluations as having a visibility enabling itself to be used as a model for confirming before a medical operation the position to which to insert a scalpel blade from all of the five surgeons.

### (Example 8)

A mold dedicated for a blood vessel was formed in the same manner as in Example 6, for the blood vessel of Example 7.

A gel composition liquid was prepared in the same manner as in Example 6, except that unlike in the production process of the gel composition liquid of Example 6, MS MAGENTA VP ⁽™⁾ (manufactured by Mitsui Chemicals, Inc.) (2 parts by mass) was further added as a colorant, and the amount of synthetic hectorite (LAPONITE XLG ⁽™⁾ manufactured by Rockwood Holdings, Inc.) was changed from 8 parts by mass to 18 parts by mass. The obtained gel composition liquid was poured into the mold dedicated for a blood vessel, and formed into a hydrogel having a greater hardness, to thereby form a colored blood vessel model.

After the obtained blood vessel model was fixed at a portion of an organ model mold in the same manner as in Example 7, the same gel composition liquid as in Example 6 was poured into the mold, and a gelated organ model was taken out from the mold.

### <Evaluation>

The obtained liver model acquired additional evaluations that the blood vessel was stitchable from all of the five surgeons.

### (Example 9)

After an organ model was formed in the same manner as in Example 6, the obtained organ model was immersed in a 10% by mass glycerin aqueous solution for 1 minute, to thereby form a moisture retaining coating over the surface of the organ model.

### <Evaluation>

The organ model formed in Example 9 was left under an atmosphere having a temperature of 25°C and a humidity of 50%RH for 1 day. The amount of weight reduction thereof due to evaporation was 7%. It could be confirmed that the organ model did not incur texture change due to drying under a typical atmosphere.

### (Example 10)

An organ model was formed in the same manner as in Example 6, except that unlike in the production process of the gel composition liquid of Example 6, an aqueous solution in which glycerin was dissolved in an amount of 10% by mass was used instead of pure water.

### <Evaluation>

The organ model formed in Example 10 was left under an atmosphere having a temperature of 25°C and a humidity of 50%RH for 1 day. The amount of weight reduction thereof due to evaporation was 3.4%. It could be confirmed that the organ model did not incur texture change due to drying under a typical atmosphere.

### Reference Signs List

- 21: object
- 22: supporter
- 23: supporter
- 24: surface of an object
- 30: object jetting head unit
- 31, 32: supporter jetting head unit
- 33, 34: UV irradiator
- 35: object
- 36: supporter
- 37: object support substrate
- 38: stage
- 39: object forming apparatus

## Claims

1. A three-dimensional object (21) formation method, comprising:
forming a film by delivering a first liquid that comprises water and a hydrogel precursor;
forming a film by delivering a second liquid that comprises a curable material to a position different from a position to which the first liquid is delivered; and
curing the films formed in the respective formations of the films,
wherein the formation of the film by delivering the first liquid, the formation of the film by delivering the second liquid, and the curing are repeated a plurality of times, **characterised in that**
the method further comprises detaching a portion made of a hydrogel produced from the hydrogel precursor, and a portion made of a polymer produced from the curable material from each other by drying shrinkage, and
the hydrogel precursor comprises a water-swellable layered clay mineral which can be dispersible in water and a polymerizable monomer.

2. The three-dimensional object formation method according to claim 1,
wherein a rubber hardness of the portion made of the hydrogel is from 6 to 60.

3. The three-dimensional object formation method according to claim 1 or 2,
wherein a method for delivering the liquid is any of an ink jetting method and a dispenser method.

## Patentansprüche

1. Verfahren zur Bildung eines dreidimensionales Objekts (21), umfassend:
Bilden einer Folie durch Liefern einer ersten Flüssigkeit, die Wasser und einen Hydrogelvorläufer umfasst;
Bilden einer Folie durch Liefern einer zweiten Flüssigkeit, die ein aushärtbares Material umfasst, an eine Position, die von einer Position, an die die erste Flüssigkeit geliefert wird, verschieden ist; und
Aushärten der Folien, die in den jeweiligen Bildungen der Folien gebildet worden sind,
wobei die Bildung der Folie durch Liefern der ersten Flüssigkeit, die Bildung der Folie durch Liefern der zweiten Flüssigkeit und das Aushärten mehrere Male wiederholt werden, **dadurch gekennzeichnet, dass**
das Verfahren ferner das voneinander Ablösen eines Teils, der aus einem Hydrogel gebildet ist, das aus dem Hydrogelvorläufer hergestellt ist, und eines Teils, der aus einem Polymer gebildet ist, das aus dem aushärtbaren Material hergestellt ist, durch Trockenschrumpfen umfasst und
der Hydrogelvorläufer ein in Wasser aufquellbares schichtförmiges Tonmineral, das in Wasser dispergierbar ist, und ein polymerisierbares Monomer umfasst.

2. Verfahren zur Bildung eines dreidimensionalen Objekts nach Anspruch 1,
wobei eine Kautschukhärte des Teils, der aus dem Hydrogel gebildet ist, 6 bis 60 beträgt.

3. Verfahren zur Bildung eines dreidimensionalen Objekts nach Anspruch 1 oder 2,
wobei ein Verfahren zum Liefern der Flüssigkeit irgendeines von einem Tintenstrahlverfahren und einem Spenderverfahren ist.

## Revendications

1. Procédé de formation d'un objet tridimensionnel (21), comprenant:
la formation d'un film en fournissant un premier liquide qui comprend de l'eau et un précurseur d'hydrogel;
la formation d'un film en fournissant un second liquide qui comprend un matériau durcissable à une position différente d'une position à laquelle le premier liquide est fourni; et
le durcissement des films formés dans les formations respectives des films,
la formation du film en fournissant le premier liquide, la formation du film en fournissant le second liquide, et le durcissement étant répétés de multiples fois, **caractérisé en ce que**
le procédé comprend en outre le détachement d'une partie constituée d'un hydrogel produit à partir du précurseur d'hydrogel, et d'une partie constituée d'un polymère produit à partir du matériau durcissable l'une de l'autre par rétrécissement par séchage, et
le précurseur d'hydrogel comprenant un minéral argileux stratifié pouvant gonfler dans l'eau qui peut être dispersé dans l'eau et un monomère polymérisable.

2. Procédé de formation d'un objet tridimensionnel selon la revendication 1,
une dureté de caoutchouc de la partie constituée de l'hydrogel étant de 6 à 60.

3. Procédé de formation d'un objet tridimensionnel selon la revendication 1 ou 2,
dans lequel un procédé de fourniture du liquide est n'importe lequel d'un procédé par jet d'encre et d'un procédé de distribution.
